**Europäisches Patentamt**

**European Patent Office**

**Office européen des brevets**

(19)

(11) **EP 1 557 790 A2**

(12) # EUROPEAN PATENT APPLICATION

(43) Date of publication:
**27.07.2005 Bulletin 2005/30**

(51) Int Cl.⁷: **G06T 5/00**

(21) Application number: **05100493.5**

(22) Date of filing: **26.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.01.2004 KR 2004004771**

(71) Applicant: **LG Electronics Inc.**
**Seoul 150-875 (KR)**

(72) Inventors:
- **Lee, Hyun Bae**
  **Dongan-gu, Anyang-shi Kyunggi-do (KR)**
- **Kim, Yu Nam**
  **SEOUL (KR)**

(74) Representative: **Ekström, Nils**
**Albihns Göteborg AB**
**P.O. Box 142**
**401 22 Göteborg (SE)**

(54) **Noise reduction in low-illuminance image**

(57)     Disclosed is an image processing method including the steps of: obtaining a brightness of a low-illuminance image from a histogram distribution of the low-illuminance image; and differently selecting a pixel state of each of local images depending on the brightness, so as to eliminate a noise while obtaining the image with definition improved in a low-illuminance environment.

Fig. 1

## Description

## BACKGROUND OF THE INVENTION

### Field of the Invention

The present invention relates to an image processing apparatus and method, and more particularly, to an image processing apparatus and method in which a high-definition image can be provided in a low-illuminance environment. Much more particularly, the present invention relates to an image processing apparatus and method in which a noise is selectively eliminated from a low-illuminance image captured in a low-illuminance environment, to provide a more defined low-illuminance image.

### Description of the Related Art

Recently, as a demand for a digital image processing apparatus including a digital camcorder, a camera phone and the like is being rapidly increased, its fun ctions are being diversified and intelligent. Meanwhile, as a resolution supported when a still image or a mobile image is captured by the image processing apparatus is gradually upgraded, a user is satisfied to some degrees with the image captured in a c ommon environment, that is, in a high-illuminance environment being under illumination such as a daylight or a fluorescent lamp.

However, the user increasingly desires to capture the image with a secured picture quality even in a low -illuminance environment such as theater's interior, dark room and night as well as in the common environment. For example, when it is intended to capture an image of one's favorite enthusiastic star at a concert or a sea background at night, a low -illuminance image is picked-up to have a low brightness unlike a common image.

In a conventional image processing apparatus, a flash is set at the low-illuminance environment to change the low-illuminance environment into the high-illuminance environment by using a momentary light, and then a desired image is captured. However, the conventional image processing apparatus has a drawback in that if the flash is not set, the image cannot be captured in the low-illuminance environment, and the flash cannot be used due to an anxiety of momentary light's hindering to others at public places such as the theater's interior.

Accordingly, the conventional image processing apparatus has a drawback in that it is not easy to capture the image in the low-illuminance environment.

Further, the conventional image processing apparatus has a drawback in that even though the image is captured, a defined image cannot be obtained due to its much mixed noise.

## SUMMARY OF THE INVENTION

Accordingly, the present invention is directed to an image processing apparatus and method that substantially obviates one or more problems due to limitations and disadvantages of the related art.

An object of the present invention is to provide an image processing apparatus and method in which an image captured in a low-illuminance environment is corrected and noise - eliminated to provide a high-definition image.

Another object of the present invention is to provide an image processing apparatus and method in which a noise is differentially eliminated depending on a brightness o f an image, so that the noise can be optimally eliminated depending on an illuminance environment.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the w ritten description and claims hereof as well as the appended drawings.

To achieve these objects and other advantages and in accordance with the purpose of the invention, as embodied and broadly described herein, there is provided an image processing apparatus including: a signal-to-noise ratio calculating unit for calculating a signal-to-noise ratio on the basis of a brightness of a low-illuminance image from a histogram distribution of the low-illuminance image; a local image dispersion calculating unit for calculating a dispersion value of a specific local image selected from the low-illuminance image; and an image correcting unit for differently correcting a corresponding local image depending on the signal-to-noise ratio and the local image dispersion value.

In another aspect of the present invention, there is provided an image processing method including the steps of: obtaining a brightness of a low-illuminance image from a histogram distribution of the low -illuminance image; and differently selecting a pixel state of each of local images depending on the brightness.

In a further aspect of the present invention, there is provided an image processing method including the steps of: obtaining a brightness of a low-illuminance image from a histogram distribut ion of the low-illuminance image; and differently eliminating a noise from each of local images depending on the brightness.

The present invention can have an effect in that the low-illuminance image can be more clearly displayed.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a schematic construction of an image processing apparatus according to a first embodiment of the present invention;

FIGS. 2 and 3 are histograms before and after a histogram is smoothed;

FIGS. 4 and 5 are images before and after a histogram is smoothed;

FIG. 6 is a block diagram illustrating a schematic construction of an image processing apparatus according to a second embodiment of the present invention;

FIG. 7 is a block diagram illustrating a detailed construction of an image eliminating unit of FIG. 6; and

FIG. 8 is a picture in which a noise is eliminated from a low-illuminance image according to a second embodiment of the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

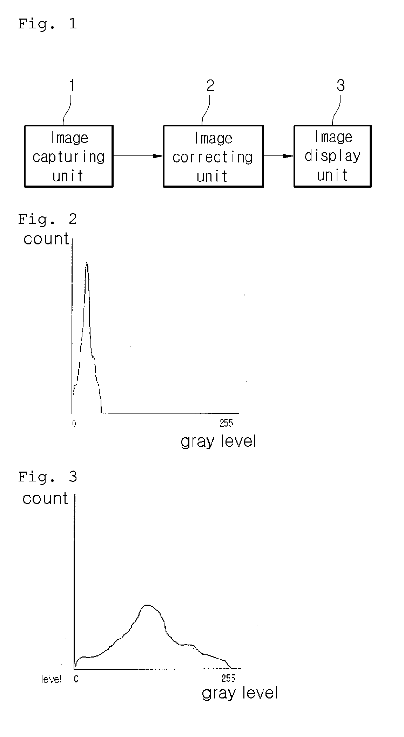

FIG. 1 is a block diagram illustrating a schematic construction of an image processing apparatus according to a first embodiment of the present invention.

Referring to FIG. 1, the inventive image processing apparatus includes an image capturing unit 1 for capturing a low - illuminance image; an image correcting unit 2 for correcting the low-illuminance image; and an image displaying unit 3 for displaying the noise-eliminated image. Here, the low-illuminance image means an image captured and inputted in the low-illuminance environment.

The image capturing unit 1 for capturing the image from a specific object and background is preferably comprised of a lens, a filter, and an image pickup sensor such as a Charge Coupled Device (CCD) sensor, a Complementary Metal Oxide Semiconductor (CMOS) sensor or the like.

When the image is captured in the low -illuminance environment without illumination, the image correcting unit 2 can correct the low-illuminance image into a high-illuminance image on the basis of software, up to a suitable level for viewing with naked eyes, even without an additional illuminating device such as a flash and the like. For example, the image correcting unit 2 corrects the inputted low-illuminance image into the high-illuminance image by using a histogram smoothing.

Here, the histogram smoothing is a technique in which when a gray level distribution of the image is limited to a predetermined gray level, a histogram is smoothed to improve a brightness of the image.

Hereinafter, the histogram smoothing is described. As shown in FIG. 2, in the histogram for the low-illuminance image, a frequency distribution is mainly provided at a low gray level range. At this time, if the histogram smoothing is performed, the low-illuminance image in which a frequency is relatively more distributed at the low gray level range is rearranged and expansively distributed at a whole gray level range of 0 to 255. Accordingly, if the histogram smoothing is performed, the low - illuminance image such as dark background and object images is corrected and converted into a distinguishable image.

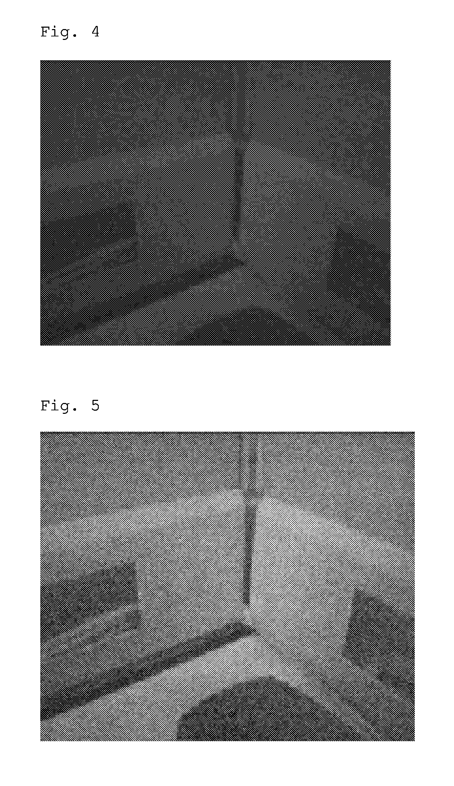

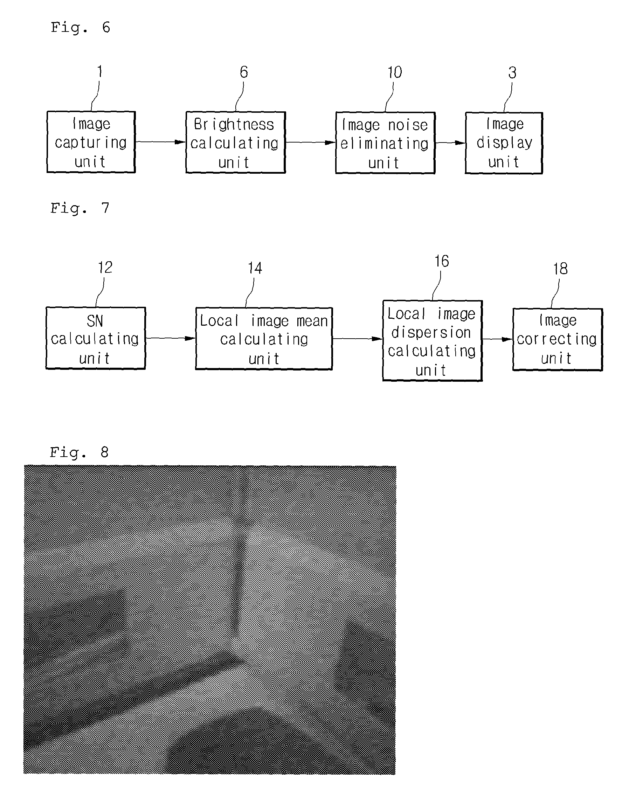

FIGS. 4 and 5 are images before and after the histogram is smoothed.

As shown in FIG. 4, the image captured in the low-illuminance environment is very dark and accordingly, a boundary between the object and its peripheral background is indistinct not to identify the object and its peripheral background with each other. On the contrary, as shown in FIG. 5, if the image is corrected using the histogram smoothing, the image gets a higher illuminance to have a large discrimination in comparison with the original image of FIG. 4.

Meanwhile, the low-illuminance image generally has an original noise, which is added when the image is captured. If such the low-illuminance image is converted into the high - illuminance image through the histogram smoothing, the noise originally added to the low-illuminance image is also amplified.

As a result, the more defined image can be provided by the image correcting unit 2, but there is a drawback in that an image degradation caused by the noise is more worsen than before the image is corrected. For this, the present invention proposes an image processing apparatus according to a second embodiment of the present invention.

FIG. 6 is a block diagram illustrating a schematic construction of the image processing apparatus according to the second embodiment of the present invention.

Referring to FIG. 6, the image processing apparatus includes an image capturing unit 1 for capturing a 1 ow-illuminance image; a brightness calculating unit 6 for calculating a brightness of the captured image; an image noise eliminating unit 10 for differentially eliminating the noise depending on the brightness of the image; and an image displaying unit 3 for providing the noise-eliminated image to a user.

In such a manner as the first embodiment of the present invention, the image capturing unit 1 for capturing the image from a specific object and background is preferably comprised of a lens, a filter, and an image pickup sensor such as a Charge Coupled Device (CCD) sensor, a Complementary Metal Oxide Semiconductor (CMOS) sensor or the like.

The brightness calculating unit 6 calculates the brightness on the basis of a histogram distribution, that is, on the basis of a brightness distribution at each of gray levels.

In detail, in the low-illuminance image captured in the image capturing unit 1, its brightness is distributed from a low gray level to a high gray level depending on the histogram distribution. At this time, in the low-illuminance image, the brightness is mainly distributed at a low gray level range.

At this time, the brightness of the low-illuminance image can be calculated from a minimal brightness provided at a predetermined rate of the whole histogram distribution, from a higher gray level of the histogram distribution. At this time, the brightness of the low-illuminance image can be calculated depending on how much the predetermined rate is set. Of course, the brightness of the low-illuminance image can be calculated in a different way, but it can be easily presumed that even though any way is employed, the brightness of the low -illuminance image be calculated lower than that of the high -illuminance image.

Alternatively, the calculated brightness of the low-illuminance image is provided to the image noise eliminating unit 10.

As shown in FIG. 7, the image noise eliminating unit 10 includes a Signal-to-Noise (SN) ratio calculating unit 12, a local image mean calculating unit 14, a local image dispersion calculating unit 16, and an image correcting unit 18.

In detail, the SN ratio calculating unit 12 calculates a SN ratio on the basis of the brightness of the low -illuminance image. At this time, the SN ratio can be expressed as in below Equation 1.

[Equation 1]

$$SN = (10000 - \alpha * I)/\beta$$

where,

SN: signal-to-noise ratio

I: brightness of low-illuminance image

$\alpha$ and $\beta$ : noise characteristic values of image capturing unit 1.

The noise characteristic values ($\alpha$, $\beta$) are varied depending on the noise characteristic of the image capturing un it, and can be experimentally obtained. In the image capturing unit of this embodiment, the noise characteristic values ($\alpha$ and $\beta$) respectively have 100

and 21.

As shown in the Equation 1, the SN ratio shows whether how much there is a noise to a signal.

Accordingly, assuming that the noise characteristics ($\alpha$ and $\beta$ ) of the image capturing unit 1 are fixed, as the brightness (I) of the low-illuminance image gets large, the signal-to-noise ratio gets small. To the contrary, as the brightness (I) of the low-illuminance gets small, the signal -to-noise ratio gets large.

Alternatively, the local image mean calculating unit 14 calculates a local image mean value of a macro block unit having a predetermined size of a pixel (x, y) at which the image is to be restored, for example, a matrix of 3*3. The local image mean value (Mlocal) can be expressed as in below Equation 2.

[Equation 2]

$$\sum\nolimits_{Local} = \frac{\sum\limits_{0}^{n} k}{n}$$

where,

k:     brightness of $I_{th}$ pixel

n:     the number of pixels

M:     local image mean value.

For example, assuming that the number (n) of the pixels is 9 and each of the pixels has the brightness in the macro block unit of 3*3, the local image mean value (M) can be calculated as a value, which is obtained by adding all of the brightnesses of the nine pixels and dividing by the pixel number of 9.

Next, the local image dispersion calculating unit 16 calculates a dispersion value of the corresponding local image by using the calculated local image mean value. At this time, the local image dispersion value (Vlocal) can be expressed as in below Equation 3.

[Equation 3]

$$V_{Local} = \frac{\sum\limits_{0}^{n} (k - M_{local})^2}{n}$$

By comparing the local image dispersion value calculated in the Equation 3 with the signal-to-noise ratio calculated in the Equation 1, it can be identified whether a currently restored local image is the object or the background or whether or not it corresponds to a boundary region.

In detail, in case where the signal-to-noise ratio (SN) is more than the local image dispersion value (Vlocal) (SN > Vlocal), the corresponding local image corresponds to the object or the background. Further, in case where the signal -to-noise ratio (SN) is less than the local image dispersion value (Vlocal) (SN < Vlocal), the corresponding local image corresponds to the boundary region. The SN ratio is identically applied to a whole pixel of a single frame, but the local image dispersion value is a dispersion value for a brightness of a specific local image. Therefore, it can be presumed that in case where the local image has a high brightness, the local image corresponds to the boundary region in which a brightness difference is large between the pixels.

If the corresponding local image is determined in its state as a comparative result, the corresponding local image is corrected accordingly.

In detail, in case where the corresponding local image corresponds to the object or the background, the corresponding local image has the local image mean value (Mlocal) provided in the Equation 2. Additionally, in case where the corresponding local image corresponds to the boundary region, the corresponding local image has the brightness (k) of the low-illuminance image captured by the image capturing unit 1 as it is.

At this time, all pixels of the corresponding local image, for example, nine pixels in the 3*3 matrix have the local image mean value. Therefore, the pixels can have the mean value for the local image corresponding to the object or the background with a noise influence approximately ignored. Of course, since the local image has an original brightness at the boundary region as it is, there is not generated a drawback of the indistinct boundary region.

The present invention describes that one local image is selected and corrected. However, the present invention can really correct a plurality of local image s by calculating the Equations 2 and 3 for the plurality of local images selected from all images captured by the image capturing unit 1.

As described above, as shown in FIG. 8, the noise can be differently eliminated depending on the brightness of the low - illuminance image to provide the more defined image than FIGS. 4 and 5. Specifically, it can be understood that a more defined boundary profile is viewed at the boundary region.

Meanwhile, as described above, after the noise is eliminated, the noise-eliminated image is displayed to the user through the image displaying unit 3. The image displaying unit 3 can be a preview displaying unit of before the image is captured.

According to the present invention, a degree of the noise mixed with the low-illuminance image, which is captured using the signal-to-noise ratio, is detected, and a predetermined local image to be restored is selected to respectively calculate the local image mean value and the local image dispersion value, and the signal-to-noise ratio is compared with the local image dispersion value to differently correct the selected local image depending on the comparative result.

Meanwhile, in case where the histogram smoothing is performed for the second embodiment of the present invention, the more defined and bright image can be expected.

According to the present invention, the image captured in the low-illuminance environment can be corrected and noise-eliminated to obtain the high-definition image.

Further, the noise is differentially eliminated depending on the brightness of the image to be optimally eliminated depending on an illuminance environment. Therefore, the more defined image can be provided even in the low - illuminance environment.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image processing method being **characterized by** comprising the steps of:

   obtaining a brightness of a low -illuminance image from a histogram distribution of the low-illuminance image; and
   differently eliminating a noise from each of local images depending on the brightness.

2. The method according to claim 1, being **characterized in that** the noise eliminating comprises the steps of:

   calculating a signal-to-noise ratio from the brightness;
   calculating each of local image mean values and each of local image dispersion values, for a plurality of local images selected from the low-illuminance image; and
   differently selecting a pixel value of a corresponding local image depending on a comparative result of the signal -to-noise ratio and the local image dispersion value.

3. The method according to claim 2, being **characterized in that** in case where the signal-to-noise ratio is more than the local image dispersion value, a corresponding local image has the local image mean value.

4. The method according to claim 3, being **characterized in that** the corresponding local image corresponds to an object or a background.

**5.** The method according to claim 3, being **characterized in that** the corresponding local image has all the same values.

**6.** The method according to claim 2, being **characterized in that** in case where the signal-to-noise ratio is less than the local image dispersion value, the corresponding local image is a local image corresponding to the low-illuminance image as it is.

**7.** The method according to claim 6, being **characterized in that** the corresponding local image corresponds to a boundary region.

**8.** The method according to any one of preceding claims 1 to 7, being **characterized in that** the brightness is calculated from a minimal brightness provided at a predetermined rate of a whole histogram distribution, from a higher gray level of the histogram distribution.

**9.** The method according to any one of preceding claims 1 to 7, being **characterized by** further comprising the step of providing the noise-eliminated image, as a preview, to a user.

**10.** An image processing apparatus being **characterized by** comprising:

   a signal-to-noise ratio calculating unit for calculating a signal-to-noise ratio on the basis of a brightness of a low-illuminance image from a histogram distribution of the low - illuminance image;
   a local image dispersion calculating unit for calculating a dispersion value of a specific local image selected from the low - illuminance image; and
   an image correcting unit for differently correcting a corresponding local image depending on the signal-to-noise ratio and the local image dispersion value.

**11.** The apparatus according to claim 10, being **characterized by** further comprising:

   an image capturing unit for capturing the low -illuminance image; and
   a brightness calculating unit for calculating the brightness of the low-illuminance image from the histogram distribution of the low-illuminance image.

**12.** The apparatus according to claim 10, being **characterized by** further comprising an image displaying unit for displaying the corrected low-illuminance image as a preview.

**13.** The apparatus according to claim 10, being **characterized in that** the image correcting unit corrects the low - luminance image to allow the corresponding local image to have the local image mean value in case where the signal -to-noise ratio is more than the local image dispersion value, and allow the corresponding local image to be a local image corresponding to the low-illuminance image as it is in case where the signal-to-noise ratio is less than the local image dispersion value.

Fig. 1

```
        1                 2                 3
    ┌─────────┐      ┌─────────┐      ┌─────────┐
    │  Image  │      │  Image  │      │  Image  │
    │capturing│ ───▶ │correcting│ ──▶ │ display │
    │  unit   │      │  unit   │      │  unit   │
    └─────────┘      └─────────┘      └─────────┘
```

Fig. 2

count

0                           255
                    gray level

Fig. 3

count

level  0                    255
                    gray level

Fig. 4

Fig. 5

Fig. 6

```
┌──────────┐      ┌──────────┐      ┌──────────┐      ┌──────────┐
│  Image   │      │Brightness│      │Image noise│      │  Image   │
│capturing │ ───► │calculating│ ──► │eliminating│ ──► │ display  │
│   unit   │      │   unit   │      │   unit   │      │   unit   │
└──────────┘      └──────────┘      └──────────┘      └──────────┘
     1                 6                10                 3
```

Fig. 7

```
┌──────────┐      ┌────────────┐      ┌──────────┐      ┌──────────┐
│    SN    │      │Local image │      │Local image│      │  Image   │
│calculating│ ──► │    mean    │ ──► │dispersion │ ──► │correcting │
│   unit   │      │calculating │      │calculating│      │   unit   │
│          │      │    unit    │      │   unit   │      │          │
└──────────┘      └────────────┘      └──────────┘      └──────────┘
     12                14                 16                 18
```

Fig. 8